# EUROPÄISCHE PATENTSCHRIFT

(11) **EP 0 570 753 B1**
(45) Veröffentlichungstag und Bekanntmachung des Hinweises auf die Patenterteilung: **18.09.1996**
(21) Anmeldenummer: 93107170.8
(22) Anmeldetag: 03.05.1993
(51) Int. Cl.: E01C 19/48

(54) **Fahrbarer Deckenfertiger**
Mobile finisher
Finisseur mobile

(30) Priorität: 21.05.1992 DE 9206935 U
(43) Veröffentlichungstag der Anmeldung: 24.11.1993
(73) Patentinhaber: Joseph Vögele AG, D-68146 Mannheim (DE)
(72) Erfinder: Ulrich, Alfred, Dr.-Ing., W-6802 Ladenburg (DE)
(74) Vertreter: Grünecker, Kinkeldey, Stockmair & Schwanhäusser Anwaltssozietät

(56) Entgegenhaltungen:
- EP-A- 0 065 581
- EP-A- 0 422 489
- EP-A- 0 470 877
- DE-A- 3 237 718
- DE-U- 9 107 237
- FR-A- 1 545 123
- US-A- 4 776 750

## Beschreibung

Die Erfindung betrifft einen fahrbaren Deckenfertiger der im Oberbegriff des Patentanspruchs 1 angegebenen Art.

Fahrbare Deckenfertiger, insbesondere Großfertiger, werden in der Regel per Tieflader von einem Einsatzort zum anderen transportiert. Obwohl moderne Tieflader nur mehr eine Ladeflächehöhe von kaum mehr als 500 mm haben, überschreitet der aufgeladene Deckenfertiger mit der hoch auftragenden Führerkabine die zum Unterfahren von Unterführungen oder Fahrleitungen vorgeschriebene Transporthöhe von 4,0m (StVZO, 9. Aufl., Mai 1965, S. 151; 154).

Deckenfertiger sind oft (z.B. DE-A-32 37 718) mit einer seitlich offenen Überdachung des Führerstandes ausgestattet, die sich in manchen Fällen für den Transport des Fertigers abbauen, zusammenfalten oder gemäß DE-U-91 07 237 nach hinten abklappen oder absenken läßt. Bei dem aus DE-U-91 07 237 bekannten Fertiger wird zum Transport des Fertigers auf einem Tieflader zumindest der Oberteil des Schutzaufbaus des Führerstands abgenommen oder nach hinten abgesenkt.

Es wurde ferner auf der BAUMA 1992 von der Firma Bitelli, IT, ein Groß-Deckenfertiger ausgestellt, bei dem auf der Plattform eine großräumige stabile Führerkabine angeordnet ist, die sich über die gesamte in Fahrtrichtung gesehene Tiefe der und über die Gesamtbreite der Plattform erstreckt. Mit diesem auf einen Tieflader geladenen Deckenfertiger wird wegen der Führerkabine die zulässige Transporthöhe weit überschritten. Andererseits ist das Arbeiten in einer geschlossenen stabilen Führerkabine für den Fahrzeugführer gerade bei den lauten, oft kalten oder heißen Arbeitsbedingungen auf einem Deckenfertiger angenehmer. Der Fahrzeugführer ist nicht nur vor diesen störenden Einflüssen sondern auch vor Staub und aggressiven Gerüchen geschützt.

Der Erfindung liegt die Aufgabe zugrunde, einen fahrbaren Dekkenfertiger der eingangs genannten Art zu schaffen, der unter Beibehalt hohen Komforts für den Fahrzeugführer einfach zu transportieren ist.

Die gestellte Aufgabe wird erfindungsgemäß mit den im kennzeichnenden Teil des Patentanspruchs 1 enthaltenen Merkmalen gelöst.

Bei dieser Ausbildung des Deckenfertigers verbleibt die in Arbeitslage für den Transport zu hohe, geschlossene Führerkabinebeim Transport auf der Plattform des Deckenfertigers, ohne in der Transportlage auf dem Tieflader jedoch die zulässige Transporthöhe von 4,0m zu überschreiten. Die Dimensionierung der Führerkabine und ihre Anbringungsart auf der Plattform ermöglichen es, daß die Führerkabine rasch und einfach in die Transportlage umlegbar ist und mit ihrem Umriß innerhalb der zulässigen Transporthöhe bleibt, wenn der Deckenfertiger auf einen Tieflader aufgeladen ist. Da die Führerkabine auf dem Deckenfertiger bleibt und mit diesem transportiert wird, ist für die Führerkabine selbst kein eigener Transportraum erforderlich. Das erneute Aufstellen der Führerkabine in die Arbeitslage mit wenigen Handgriffen rasch und einfach durchführbar. Da sie auf der Plattform verbleibt, werden beim Transport störende Überstände zur Seite oder nach hinten vermieden. Kabinen ähnlich Skiliftkabinen sind kostengünstig herstellbar und sehr leicht, so daß die Führerkabine keinen nennenswerten Beitrag zum Gesamtgewicht des Fertigers leistet.

Die maximal zulässige Kabinenbreite der umlegbaren Führerkabine eines solchen Deckenfertigers läßt sich errechnen aus der kleinsten Ladeflächenhöhe eines Tiefladers (= 0,4 m), der kleinsten Plattformhöhe eines solchen Deckenfertigers (= 1,3m), sowie der größten gemäß StVZO zulässigen Transporthöhe eines Tiefladers (= 4,0m): Kabinenbreite = 4,0 m - 0,4 m - 1,3 m = 2,3 m).

Ohne Bezug zu einem Transportproblem sind verstellbare oder abklappbare oder sogar abnehmbare Führerkabinen bei mit einem fahrbaren Deckenfertiger nicht vergleichbaren Schwerfahrzeugen bekannt. Beispielsweise ist bei einem aus EP-A-0 065 581 bekannten Mähdrescher die Führerkabine für Wartungsarbeiten an innenliegenden Komponenten des Mähdreschers vollständig wegklappbar. Bei einem aus FR-B-1 545 123 bekannten Sattelschlepper ist die Führerkabine in Querrichtung auf dem Chassis hin-und herverschiebbar, um dem Fahrzeugführer zum Manipulieren mit Containern auf engstem Raum optimale Blickwinkel zu ermöglichen. Bei einem Schlepper gemäß EP-A-0 422 489 ist das Führerhaus um eine in Längsrichtung des Schleppers und an einer Seite desselben liegende Scharnierachse zur Seite abklappbar, um einen ausreichenden Zugang für Wartungsarbeiten darunterliegender Komponenten zu schaffen.

Eine baulich einfache und formschöne Ausführungsform geht aus Anspruch 2 hervor. Es läßt sich die Führerkabine in der Transportlage leicht auf der Plattform verstauen.

Baulich einfach ist ferner die Ausführungsform gemäß Anspruch 3. Die Führerkabine wird quer zur Fahrtrichtung gelegt, wenn der Deckenfertiger transportiert werden muß.

Alternativ ist die Ausführungsform gemäß Anspruch 4 zweckmäßig, bei der die Führerkabine nach hinten umgeklappt und dann nach vorne geschoben wird.

Eine weitere, einfache Ausführungsform geht aus Anspruch 5 hervor. Für den Transport wird die Führerkabine von der Plattform gelöst und dann auf dieser verstaut.

Zweckmäßig ist ferner die Ausführungsform gemäß Anspruch 6, weil sich das Bedienpult dann einfach mit der Führerkabine umlegen läßt oder vor dem Umlegen entfernt und z.B. in der umgelegten Führerkabine vestaut wird.

Weiterhin ist die Ausführungsform gemäß Anspruch 7 zweckmäßig. Der Fahrersitz bleibt zweckmäßigerweise in der Führerkabine.

Wichtig ist die Ausführungsform gemäß Anspruch 8. Der Fahrzeugführer muß unter bestimmten Einsatzbedingungen sein Augenmerk gezielt auf die eine oder die andere Seite des Fertigers richten. Die Führerkabine wird je nach Bedarf quer auf der Plattform verstellt, vorzugsweise verfahren, damit der Fahrzeugführer optimale Arbeitsbedingungen hat. Zweckmäßigerweise ist ein Verfahrantrieb vorgesehen. In der einfachsten Form kann die Führerkabine auch von Hand auf der Plattform verschoben und dann in der jeweiligen Arbeitslage verriegelt werden. Eine stabile Halterung der Führerkabine auf der Plattform ist gegeben. In der Führungsbahn wird die Führerkabine querverstellt. In der Führungsbahn kann die umgelegte Führerkabine aber auch platzsparend verstaut werden.

Zweckmäßig ist die Ausführungsform gemäß Anspruch 9, weil bei über die seitliche Begrenzung der Plattform hinaus verstellter Führerkabine der Fahrzeugführer besonders guten Ausblick auf die Seiten des Fertigers bzw. der von diesem geschleppten Bohle hat.

Eine einfache Handhabung beim Umlegen oder Aufstellen der Führerkabine ist bei der Ausführungsform gemäß Anspruch 10 gegeben. Die Halterung wird gelöst. Dann läßt sich die Führerkabine um das Scharnier umklappen.

Bei der Ausführungsform gemäß Anspruch 11 läßt sich die Führerkabine nach jeder Seite umlegen. Das jeweils im Eingriff bleibende Scharnier sichert die Führerkabine beim Umlegen.

Bei der Ausführungsform gemäß Anspruch 12 läßt sich die Führerkabine mittels des Verschiebeantriebs in jede beliebige Position stellen, gegebenenfalls vom Inneren der Führerkabine aus. Der Umlegeantrieb gestattet das Umlegen und Aufstellen der Führerkabine ohne zusätzliche Hilfskräfte. Die Dämpfglieder verhindern Beschädigungen der gegebenenfalls empfindlichen Kabine.

Verriegelungen können sowohl zum Festlegen in der Arbeits- als auch in der Transportlage benutzt werden.

Ein weiterer, besonders wichtiger Gedanke geht aus Anspruch 13 hervor. Bei Regen, Schneefall und Hagel hat das am Fertiger arbeitende Personal keine Möglichkeit, sich unterzustellen. Das an der Führerkabine umsetzbar oder abnehmbar angebrachte Dach, das beispielsweise bis über die geschleppte Bohle hinausragt, schafft auf einfache Weise einen Unterstand für die Leute, die sich entweder auf die Plattform, auf die Bohle oder hinter die Bohle und unter das Dach stellen, wenn dies witterungsbedingt erforderlich ist. Das Dach läßt sich rasch abnehmen und platzsparend verstauen. In der Transportlage der Führerkabine ist das Dach zweckmäßigerweise abgenommen oder umgeklappt.

Bei der Ausführungsform gemäß Anspruch 14 wird der Komfort für den Fahrzeugführer weiter gesteigert.

Nahezu perfekte Arbeitsbedingungen, insbesondere in heißen Ländern oder bei heißer oder feuchter Witterung, findet der Fahrzeugführer bei der Ausführungsform gemäß Anspruch 15 vor.

Wichtig ist ferner die Ausführungsform gemäß Anspruch 16, weil die Führerkabine mit ihrem Boden nicht über die Seitenbegrenzung der Plattform hinauszufahren braucht und der Fahrzeugführer trotzdem nach unten auf die Bohle oder den Randbereich der Arbeitsbreite des Deckenfertiger blicken kann.

Anhand der Zeichnung werden Ausführungsformen des Erfindungsegenstandes erläutert. Es zeigt:
- Fig. 1: eine schematische Seitenansicht eines Deckenfertigers, in Arbeitslage und - strichliert - beim Transport,
- Fig. 2: eine Rückansicht des Deckenfertigers von Fig. 1,
- Fig. 3: eine Perspektivansicht einer Detailvariante, und
- Fig. 4: eine Perspektivansicht einer weiteren Detailvariante.

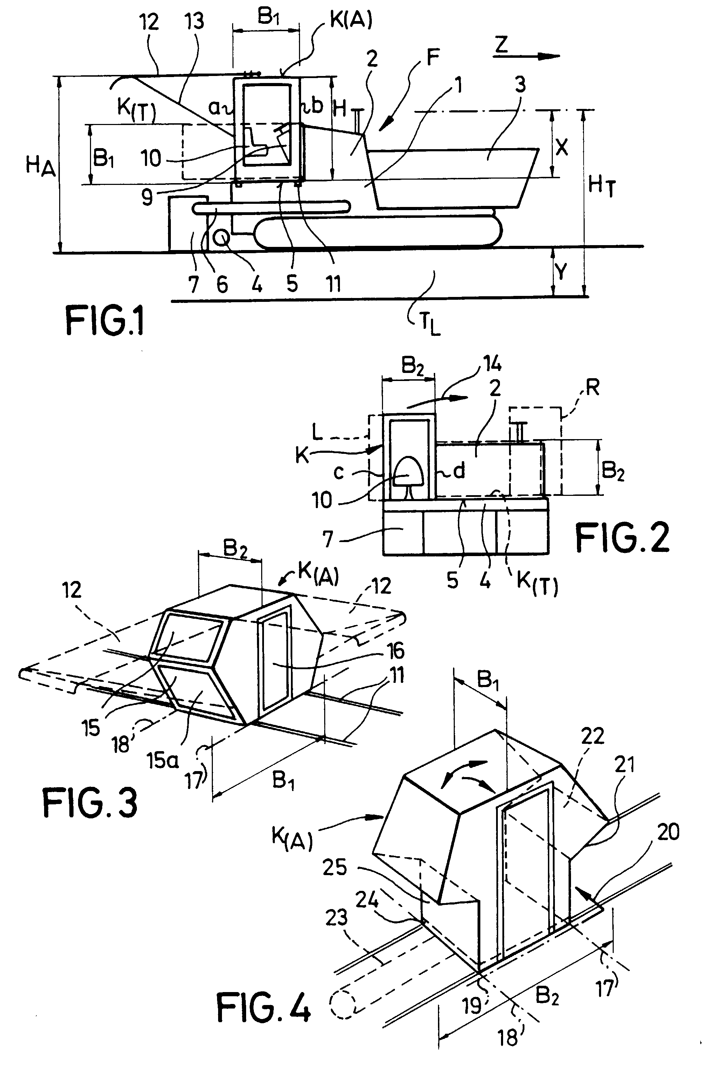

Ein fahrbarer Deckenfertiger F gemäß den Fig. 1 und 2 weist auf einem Fahrzeugunterbau 1 einen die Antriebsquelle enthaltenden Aufbau 2 und vor diesem einen Gutbunker 3 auf. Hinter dem hinteren Ende des Unterbaus 1 ist eine Gutverteileinrichtung 4 angeordnet. In Fahrtrichtung Z hinter dem Aufbau 2 liegt in einem Abstand oberhalb des Bodens eine Plattform 5. Der Abstand der Plattform 5 vom Boden beträgt z.B. zwischen 1,30m und 1,80m. An Auslegern 6 ist eine geschleppte Einbau- oder Aufrauhbohle 7 angebracht. Der Deckenfertiger fährt auf einem Raupenfahrwerk 8 oder einem Reifenfahrwerk (nicht gezeigt). Auf der Plattform 5 ist eine Führerkabine K angeordnet, in der ein Bedienpult 9 und ein Fahrersitz 10 vorgesehen sind. Die Führerkabine K hat eine Höhe H, eine in Fahrtrichtung gesehene Breite Bl und eine quer zur Fahrtrichtung gesehene Breite B2. In Fig. 1 ist die Führerkabine K in ausgezogenen Linien in ihrer Arbeitslage A dargestellt. Für den Transport des Deckenfertigers F auf einem Tieflager TL wird die Führerkabine K in eine Transportlage T umgelegt, und zwar gemäß Fig. 1 entweder nach hinten (strichliert angedeutet), wobei sie ggfs. zusätzlich nach dem Umlegen in Fahrtrichtung vollständig auf die Plattform 5 geschoben ist, oder gemäß Fig. 2 zu einer oder zur anderen Seite quer zur Fahrtrichtung (strichliert angedeutet).

Bei der Variante gemäß Fig. 1 wird die Führerkabine auf ihre Kabinenseite a gelegt. Bei der in Fig. 2 angedeuteten Variante wird die Führerkabine entweder auf ihre Kabinenseite c oder auf die Kabinenseite d umgelegt.

Der Tieflader TL kann üblicherweise eine Ladeflächenhöhe Y zwischen 400mm und 1,0m haben. Die zulässige Transporthöhe H_{T} würde mit in Arbeitslage A befindlicher Führerkabine K überschritten. Bei in Transportlage T befindlicher Führerkabine K wird hingegen die zulässige Transporthöhe H_{T} eingehalten oder unterschritten. Zu diesem Zweck sind die Breiten B1 oder B2 kleiner als die Höhendifferenz X zwischen der Plattform 5 und der zulässigen Transporthöhe H_{T} bei auf dem Tieflader TL aufgeladenen Deckenfertiger. Mit der normalen Arbeitshöhe H_{A} des Deckenfertigers F bei in Arbeitslage A befindlicher Führerkabine würde - wie in Fig. 1 erkennbar - die zulässige Transporthöhe H_{T} bei aufgeladenem Deckenfertiger F überschritten.

Das Bedienpult 9 und/oder der Fahrersitz 10 können zusammen mit der Führerkabine K umgeklappt werden. Es ist aber auch denkbar, solche Komponenten vorher abzubauen.

Aus Fig. 1 ist erkennbar, daß an der Führerkabine K ein nach hinten auskragendes und gegebenenfalls bis über die Bohle 7 hinausragendes Dach 12 lösbar befestigt ist, das mit Versteifungen 13 gehalten wird und als Unterstand für hinter der Führerkabine auf der Bohle 7 oder hinter der Bohle stehende Personen dient.

Die Führerkabine K sitzt auf der Plattform 5 in einer Führungbahn 11. Die Führerkabine K ist quer zur Fahrtrichtung hin- und herverstellbar, und zwar zweckmäßigerweise bis über die seitlichen Begrenzungen der Plattform 5 hinaus (in Fig. 2 strichliert und mit L und R angedeutet).

Wird die Führerkabine wie in Fig. 1 angedeutet, nach hinten umgelegt, dann kann ihre quer zur Fahrtrichtung gesehene Breite B2 auch größer als die Höhendifferenz X sein. Wird hingegen die Führerkabine gemäß Fig. 2 zur einen oder zur anderen Seite umgelegt, dann kann ihre in Fahrtrichtung gesehene Breite B1 größer als die Höhendifferenz X sein.

Die Führerkabine K befindet sich beim Arbeiten zweckmäßigerweise an einer oder an der anderen Seite der Plattform 5 (Fig. 2). Wenn sie an der linken Seite der Plattform 5 steht, wird sie zweckmäßigerweise in Richtung eines Pfeiles 14 umgelegt, so daß sie in der Transportlage T nicht über die seitliche Begrenzung der Plattform hinausragt. Die Führerkabine K läßt sich auch in umgelegter Transportlage auf der Plattform 5 verschieben.

Bei der Ausführungsform der Führerkabine K gemäß Fig. 3 ist die Breite B2 quer zur Fahrtrichtung kleiner als die Breite B1 in Fahrtrichtung. Die Führerkabine ist zweckmäßigerweise eine Leichtbaukonstruktion mit Fenstern 15 und einer Türe 16. Das schräggeneigte Fenster 15a ermöglicht den Blick nach hinten unten. Das Dach 12 (in Fig. 3 strichliert angedeutet) kann entweder nach hinten und/oder zur Seite auskragen. Die Führerkabine K läßt sich um angedeutete Scharniere 17, 18 zur einen oder zur anderen Seite umlegen. Die Scharniere sind zweckmäßigerweise mit Steckbolzen lösbar, wobei zum Umlegen jeweils nur ein Scharnier gelöst wird.

Bei der Ausführungsform der Führerkabine K gemäß Fig. 4, die in ihrer Arbeitslage A gezeigt ist, ist ein Verfahrantrieb 23 zum Verfahren der Führerkabine auf der Plattform 5 strichliert angedeutet. Die in Fahrtrichtung gesehene Breite B1 ist kleiner als die quer zur Fahrtrichtung gesehene Breite B2. Die Führerkabine K kann entweder um das Scharnier 17 oder um das Scharnier 18 zur Seite umgelegt werden. Denkbar ist es aber auch, die Führerkabine K wie in Fig. 1 angedeutet, um das querliegende Scharnier 19 nach hinten umzuklappen und dann in Richtung eines Pfeiles 20 zum Aufbau 2 hinzuschieben. Im Dach der Führerkabine angedeutete Pfeile versinnbildlichen die Bewegungsrichtungen.

Die in Fig. 4 gezeigte Führerkabine besitzt seitliche Ausweitungen 21, in denen Fenster 22 angeordnet sind, die es dem Fahrzeugführer ermöglichen, seitlich über die Begrenzung der Plattform nach unten zu blicken, wenn die Führerkabine mit ihrem Boden bis an die Begrenzung hingefahren ist.

Ferner ist in Fig. 4 angedeutet, daß die Führerkabine K einen Unterteil 24 und einen davon trennbaren Oberteil 25 aufweist. Der Oberteil läßt sich entweder vom Unterteil vollständig wegnehmen. Möglich wäre es auch, ihn zur einen oder zur anderen Seite oder nach hinten relativ zum Bodenteil wegzuklappen. Das Bedienpult und der Fahrersitz könnten dann im Unterteil verbleiben.

## Patentansprüche

1. Fahrbarer Deckenfertiger mit einer im Abstand oberhalb des Bodens angeordneten Plattform (5), auf der eine Führerkabine (K) mit einem Führerstand und einem Bedienpult angeordnet ist, **dadurch gekennzeichnet**, daß die Führerkabine (K) eine geschlossene Leichtbaukabine mit Fenstern (15) und einer Türe (16) ist, daß die Führerkabine (K) in ihrer Arbeitsposition (KA) auf der Plattform (5) in einer Horizontalebene gesehen zwischen zwei gegenüberliegenden Kabinenseiten eine Breite von höchstens 2,3m aufweist, und daß die Führerkabine (K) auf eine dieser zwei gegenüberliegenden Kabinenseiten in eine Transportlage (KT) auf die Plattform (5) umlegbar ist.

2. Deckenfertiger nach Anspruch 1, **dadurch gekennzeichnet**, daß die Führerkabine (K) annähernd quaderförmige Gestalt hat.

3. Deckenfertiger nach den Ansprüchen 1 und 2, **dadurch gekennzeichnet**, daß die Führerkabine (K) quer zur Fahrtrichtung nach wenigstens einer Seite umklappbar auf der Plattform (5) gehaltert ist.

4. Deckenfertiger nach den Ansprüchen 1 bis 3, **dadurch gekennzeichnet**, daß die Führerkabine (K) entgegen der Fahrtrichtung (Z) nach hinten abklappbar, und vorzugsweise in abgeklappter Transportlage (T) in Fahrtrichtung nach vorne verschiebbar auf der Plattform (5) gehaltert ist.

5. Deckenfertiger nach den Ansprüchen 1 und 2, **dadurch gekennzeichnet**, daß die Führerkabine (K) mittels lösbarer Befestigungselemente vollständig von der Plattform (5) lösbar und, vorzugsweise, auf dieser verstaubar ist.

6. Deckenfertiger nach den Ansprüchen 1 bis 5, **dadurch gekennzeichnet**, daß das in der Führerkabine (K) vorgesehene Bedienpult entweder wegnehmbar oder mit der Führerkabine (K) umlegbar in der Führerkabine (K) angebracht ist.

7. Deckenfertiger nach den Ansprüchen 1 bis 6, **dadurch gekennzeichnet**, daß in der Führerkabine (K) ein Fahrersitz (10) vorgesehen ist, und daß der Fahrersitz (10) entweder wegnehmbar oder mit der Führerkabine (K) umlegbar in dieser angebracht ist.

8. Deckenfertiger nach den Ansprüchen 1 bis 7, **dadurch gekennzeichnet**, daß die Führerkabine (K) in Querrichtung auf der Plattform (5) in einer Führungsbahn (11) verstellbar, vorzugsweise verfahrbar ist.

9. Deckenfertiger nach Anspruch 8, **dadurch gekennzeichnet**, daß die Führerkabine (K) bis über die seitlichen Begrenzungen der Plattform (5) hinausverstellbar ist.

10. Deckenfertiger nach den Ansprüchen 1 bis 9, **dadurch gekennzeichnet**, daß zwischen der Plattform (5) und der Führerkabine (K) an zumindest einer Kabinenseite (a, b; c, d) ein Scharnier (17, 18, 19) und an der gegenüberliegenden Kabinenseite eine lösbare Halterung vorgesehen sind.

11. Deckenfertiger nach Anspruch 10, **dadurch gekennzeichnet**, daß an beiden in Querrichtung weisenden Kabinenseiten (c, d) lösbare Scharniere (17, 18) vorgesehen sind.

12. Deckenfertiger nach den Ansprüchen 1 bis 11, **dadurch gekennzeichnet**, daß Hilfseinrichtungen wie ein Verschiebeantrieb, ein Umlegeantrieb, Umlege-Bewegungsdämpfelemente, Verriegelungen für die Führerkabine (K) vorgesehen sind.

13. Deckenfertiger nach den Ansprüchen 1 bis 12, **dadurch gekennzeichnet**, daß an der Führerkabine (K) wenigstens ein seitlich und/oder nach hinten, vorzugsweise bis über die Bohle, auskragendes Dach (12) umsetzbar bzw. abnehmbar angebracht ist.

14. Deckenfertiger nach den Ansprüchen 1 bis 13, **dadurch gekennzeichnet**, daß die Führerkabine wärme- und/oder schallisoliert ist.

15. Deckenfertiger nach den Ansprüchen 1 bis 14, **dadurch gekennzeichnet**, daß die Führerkabine (K) eine eigene Belüftungsoder Klimatisierungsanlage aufweist.

16. Deckenfertiger nach Anspruch 1, **dadurch gekennzeichnet**, daß die Führerkabine (K) zumindest seitlich eine nach außen ragende Aufweitung (21) mit einem vom Inneren der Führerkabine den Blick nach unten gestattenden Fenster (22) aufweist.

## Claims

1. A mobile road finisher comprising a platform (5) disposed at a distance above the ground and on which a driver's cab (K) with a driver's station and a control desk are disposed, characterised in that the driver's cab (K) is a closed lightweight-construction cab with windows (15) and a door (16), the driver's cab (K) in its working position (KA) on the platform (5) has a width of not more than 2.3 m in a horizontal plane between two opposite sides of the cab, and in that the driver's cab (K) can be tilted on to one of the said two opposite sides into a transport position (KT) on the platform (5).

2. A road finisher according to claim 1,
characterised in that the driver's cab (K) is approximately cuboidal.

3. A road finisher according to claim 1 and 2,
characterised in that the driver's cab (K) is mounted on the platform (5) so that it can be pivoted to at least one side transversely to the direction of travel.

4. A road finisher according to claims 1 to 3,
characterised in that the driver's cab (K) is mounted on the platform (5) so that it can be swung down to the rear in the opposite direction to the direction of travel (Z) and moved forward in the direction of travel, preferably in the swung-down transportation position (T).

5. A road finisher according to claims 1 and 2,
characterised in that the driver's cab (K) can be completely released from the platform (5) by releasable securing elements and can preferably be stowed thereon.

6. A road finisher according to claims 1 to 5,
characterised in that the control desk in the driver's cab (K) is either removable or disposed in the cab (K) so as to be tiltable with the cab (K).

7. A road finisher according to claims 1 to 6,
characterised in that a driver's seat (10) is provided in the cab (K) and in that the seat (10) is either removable or disposed in the cab (K) so as to be tiltable therein.

8. A road finisher according to claims 1 to 7,
characterised in that the driver's cab (K) is adjustable, preferably movable, in the transverse direction on the platform (5) in a guide track (11).

9. A road finisher according to claim 8,
characterised in that the driver's cab (K) is movable beyond the lateral boundaries of the platform (5).

10. A road finisher according to claims 1 to 9,
characterised in that a hinge (17, 18, 19) is provided on at least one side (a, b; c, d) of the driver's cab (K) between it and the platform (5) and a releasable mounting is provided on the opposite side of the cab.

11. A road finisher according to claim 10,
characterised in that releasable hinges (17, 18) are provided on both sides (c, d) of the cab pointing in the transverse direction.

12. A road finisher according to claims 1 to 11,
characterised in that auxiliary devices such as a shift drive, a tilt drive, tilt motion damping elements and locking means are provided for the driver's cab (K).

13. A road finisher according to claims 1 to 12,
characterised in that at least one roof (12) projecting sideways and/or to the rear, preferably over the screed, is reversibly or removably disposed on the driver's cab (K).

14. A road finisher according to claims 1 to 13,
characterised in that the driver's cab is heat and/or sound insulated.

15. A road finisher according to claims 1 to 14,
characterised in that the driver's cab (K) has a separate ventilation or air-conditioning system.

16. A road finisher according to claim 1,
characterised in that the driver's cab (K) has an extension (21) projecting to the exterior at least at the side and with a window (22) providing a view downwards from the interior of the driver's cab.

## Revendications

1. Finisseur mobile, avec une plate-forme (5) disposée à une distance au-dessus du sol, sur laquelle est disposée une cabine de conducteur (K) avec un poste de conducteur et un pupitre de commande, caractérisé en ce que la cabine de conducteur (K) est une cabine de construction légère avec des fenêtres (15) et une porte (16), que la cabine de conducteur (K) présente, dans sa position de travail (KA) sur la plate-forme (5), vue dans un plan horizontal, entre deux côtés de cabine opposés, une largeur de maximum 2,3 m, et que la cabine de conducteur (K) peut être rabattue de l'un de ces deux côtés de cabine opposés, en une position de transport (KT) sur la plate-forme (5).

2. Finisseur suivant la revendication 1, caractérisé en ce que la cabine de conducteur (K) a une forme environ parallélépipédique.

3. Finisseur suivant les revendications 1 et 2, caractérisé en ce que la cabine de conducteur (K) est fixée sur la plate-forme (5) de manière rabattable vers au moins un côté, transversalement au sens de circulation.

4. Finisseur suivant les revendications 1 à 3, caractérisé en ce que la cabine de conducteur (K) est rabattable vers l'arrière, à l'encontre du sens de circulation (Z), et est, de préférence, fixée sur la plate-forme (5), en position de transport (T) rabattue, de manière déplaçable vers l'avant, dans le sens de circulation.

5. Finisseur suivant les revendications 1 et 2, caractérisé en ce que la cabine de conducteur (K) est, à l'aide d'éléments de fixation amovibles, entièrement amovible de la plate-forme (5) et, de préférence, arrimable sur cette dernière.

6. Finisseur suivant les revendications 1 à 5, caractérisé en ce que le pupitre de commande prévu dans la cabine de conducteur (K) est placé dans la cabine de conducteur (K), de manière soit enlevable, soit rabattable avec la cabine de conducteur (K).

7. Finisseur suivant les revendications 1 à 6, caractérisé en ce que dans la cabine de conducteur (K) est prévu un siège de conducteur (10) et que le siège de conducteur (10) est placé dans celle-ci de manière soit enlevable, soit rabattable avec la cabine de conducteur (K).

8. Finisseur suivant les revendications 1 à 7, caractérisé en ce que la cabine de conducteur (K) est déplaçable, de préférence par roulage, dans le sens transversal sur la plate-forme (5), dans des rails de guidage (11).

9. Finisseur suivant la revendication 8, caractérisé en ce que la cabine de conducteur (K) peut être déplacée jusqu'au-delà des limites latérales de la plate-forme.

10. Finisseur suivant les revendications 1 à 9, caractérisé en ce qu'entre la plate-forme (5) et la cabine de conducteur (K) est prévue, au moins d'un côté de cabine (a, b; c, d), une charnière (17, 18, 19) et, du côté de cabine opposé, une fixation amovible.

11. Finisseur suivant la revendication 10, caractérisé en ce que sur les deux côtés de cabine (c, d) orientés dans le sens transversal sont prévues des charnières amovibles (17, 18).

12. Finisseur suivant les revendications 1 à 11, caractérisé en ce qu'il est prévu des dispositifs auxiliaires, tels qu'un entraînement de déplacement, un entraînement de rabattement, des éléments amortisseurs du mouvement de rabattement, des verrouillages de la cabine de conducteur (K).

13. Finisseur suivant les revendications 1 à 12, caractérisé en ce que sur la cabine de conducteur (K) est placé, de manière convertible ou amovible, au moins un toit (12) en saillie latéralement et/ou vers l'arrière, de préférence jusqu'au-dessus de la poutre.

14. Finisseur suivant les revendications 1 à 13, caractérisé en ce que la cabine de conducteur est isolée thermiquement et/ou acoustiquement.

15. Finisseur suivant les revendications 1 à 14, caractérisé en ce que la cabine de conducteur (K) présente une installation de ventilation ou de conditionnement d'air qui lui est propre.

16. Finisseur suivant la revendication 1, caractérisé en ce que la cabine de conducteur (K) présente au moins latéralement un élargissement (21), en saillie vers l'extérieur, avec une fenêtre (22) permettant, de l'intérieur de la cabine de conducteur, le regard vers le bas.
